# FASCICULE DE BREVET EUROPEEN

(11) **EP 2 718 687 B1**
(45) Date de publication et mention de la délivrance du brevet: **24.08.2016**
(21) Numéro de dépôt: 12731089.4
(22) Date de dépôt: 30.05.2012
(51) Int. Cl.: G01L 25/00

(54) **DISPOSITIF DE QUALIFICATION DE JAUGES DE DEFORMATION**
VORRICHTUNG ZUR KLASSIFIZIERUNG DEHNUNGSMESSSTREIFEN
DEVICE FOR CLASSIFYING STRAIN GAUGES

(30) Priorité: 09.06.2011 FR 1155047
(43) Date de publication de la demande: 16.04.2014
(73) Titulaire: Snecma, 75015 Paris (FR)
(72) Inventeur: DEPOTS, Emmanuel, F-77550 Moissy-Cramayel Cedex (FR); CLEMOT, Stéphane, F-77550 Moissy-Cramayel Cedex (FR); ROUSSELIN, Stéphane, F-77550 Moissy-Cramayel (FR); TULIE, Etienne, F-77550 Moissy-Cramayel (FR); VOISIN, Sébastien, F-94220 Charenton Le Pont (FR)
(74) Mandataire: Camus, Olivier Jean-Claude
(86) Numéro de dépôt international: PCT/FR2012/051209
(87) Numéro de publication internationale: WO 2012/168626

(56) Documents cités:
- GB-A- 2 285 865
- US-A- 3 956 919
- Anonymous: "Radial Blade Exhauster", Cincinnati fan Catalogue No. RBE-307, 10 août 2010 (2010-08-10), XP055016995, Extrait de l'Internet: URL:http://www.cincinnatifan.com/catalogs/ RBE-604-internet.pdf [extrait le 2012-01-19]
- ANONYMOUS: 'HIGH TEMPERATURE FANS FE-3200' TWIN CITY FAN COMPANY, [en ligne] 31 Décembre 2004, page 4PP, XP055204664 Extrait de l'Internet: <URL:http://www.tcf.com/docs/fan-engineerin g-letters/high-temperature-fans---fe-3200.p df?Status=Master> [extrait le 2015-07-24]

## Description

La présente invention concerne un dispositif de qualification de jauges de déformation, et notamment de jauges de déformation destinées à être montées sur des pièces tournantes telles que des pièces constituant une turbomachine.

Les jauges de déformation, également appelées jauges de contrainte, sont des extensomètres à fil résistant permettant de mesurer la déformation d'une pièce par variation de la résistance électrique de la jauge (la résistance électrique augmentant avec l'allongement de la jauge).

Ces jauges sont des circuits électriques collés sur les pièces à étudier et subissent donc une déformation similaire à la déformation de la pièce mise sous contrainte.

La valeur de la mesure de la jauge dépend fortement de la conception de la jauge mais également de la liaison par collage de la jauge sur la pièce à étudier. Cette liaison ne doit pas varier dans le temps (absence de viscosité) et résister à l'environnement dans lequel les jauges sont placées.

Dans certains domaines hautement technologique, tels que par exemple le domaine aéronautique, de telles jauges sont utilisées pour surveiller les déformations et les contraintes mécaniques subies par des pièces de turbomachines en cours de validation.

Lorsque ces jauges sont montées sur des pièces tournantes d'une turbomachine aéronautique, elles sont soumises à des contraintes thermiques importantes (de l'ordre de 1100°C) mais également à des contraintes centrifuges importantes (la vitesse de rotation étant de l'ordre de 20000 tours/minute). Avant de les utiliser pour des essais moteurs, il est donc nécessaire de pouvoir les qualifier et de s'assurer que les jauges et les matériaux utilisés pour la liaison par collage peuvent supporter de telles contraintes.

Or la démarche actuelle est de dimensionner les jauges de déformation au moyen de règles empiriques et le choix des matériaux pour la réalisation de la liaison par collage de la jauge est guidé uniquement par les caractéristiques mécaniques (limites en température, etc) données par le fabricant.

Le document GB 2285865 décrit un exemple de dispositif d'étalonnage de jauges de déformation par application d'un couple de torsion sur un arbre. Le document US3956919 décrit un deuxième exemple de dispositif d'étalonnage de jauges de déformation par application d'un effort de flexion. Toutefois, la méthode actuelle de dimensionnement des jauges ne permet pas de garantir leur tenue dans des conditions particulières de fonctionnement de turbomachines (i.e. avec des contraintes de température combinées à d'importantes contraintes centrifuges).

Ainsi, il peut arriver que de telles jauges mises en rotation et sous haute température se décollent lors d'un essai. La perte de la jauge implique par conséquent la perte de la mesure, et occasionnellement des dégâts multiples à l'intérieur de la turbomachine.

D'autre part, la tendance actuelle est de développer l'utilisation des jauges de déformation lors des phases d'essai afin de récupérer le maximum d'informations, ce qui se traduit par une multiplication du nombre de jauges en place dans une turbomachine lors d'un essai. La multiplication du nombre de jauges de déformation multiplie d'autant les risques de perte de mesure et de dégradation de turbomachine, impliquant par conséquent un risque important de perturbation des campagnes d'essais par des arrêts intempestifs de l'essai et/ou par la manutention de la turbomachine.

Dans ce contexte, l'invention vise à proposer un dispositif de qualification de jauges de déformation visant à qualifier les jauges ainsi que les matériaux de collage utilisés dans des conditions similaires aux conditions de fonctionnement de la turbomachine.

A cette fin, l'invention propose un dispositif de qualification de jauges liaison ;
- des moyens de mise en température aptes chauffer ledit support et agencés autour dudit support ;
lesdits moyens de liaison comportant des moyens de refroidissement aptes à limiter l'échauffement desdits moyens de mise en rotation.

Ainsi, le dispositif selon l'invention permet de tester et de qualifier des jauges ainsi que des matériaux réalisant la liaison par collage dans des conditions proches des conditions d'utilisation des turbomachines d'essais.

Grâce au dispositif selon l'invention, il possible de réaliser des essais combinant une mise en température avec une mise en rotation des jauges de manière à qualifier différentes technologies de jauges et de moyens de fixation.

Ainsi, le dispositif selon l'invention permet de réduire les risques d'endommagement des turbomachines d'essais par une connaissance précise des caractéristiques mécaniques de chaque technologie.

Le dispositif de qualification des jauges de déformation selon l'invention peut également présenter une ou plusieurs des caractéristiques ci-dessous, considérées individuellement ou selon toutes les combinaisons techniquement possibles :
- lesdits moyens de liaison comportent des moyens aptes à permettre la dilatation desdits moyens de liaisons sous l'effet de l'augmentation de la température desdits moyens de liaisons sans mise sous contrainte desdits moyens de mise en rotation ;
- ledit support est entraîné en rotation par deux arbres de transmission agencés de part et d'autre dudit support ;
- lesdits moyens de mise en température sont formés par un four chauffant par rayonnement ;
- lesdits moyens de refroidissement sont agencés de part et d'autre desdits moyens de mise en température de manière à limiter la propagation de la chaleur par conduction vers lesdits moyens de mise en rotation ;
- les moyens de refroidissement desdits moyens de liaisons sont formés par une pluralité d'ailettes de refroidissement ;
- ledit dispositif comporte des moyens de refroidissement secondaires aptes à améliorer le refroidissement desdits ailettes de refroidissement ;
- lesdits moyens de refroidissement secondaires sont formés par des générateurs soufflant de l'air sur lesdites ailettes de refroidissement ;
- ledit support est un disque.

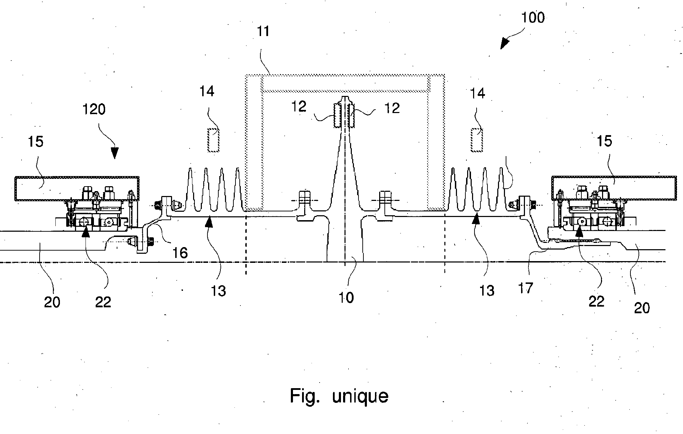

D'autres caractéristiques et avantages de l'invention ressortiront plus clairement de la description qui en est donnée ci-dessous, à titre indicatif et nullement limitatif, en référence à la figure unique, illustrant une vue en coupe d'un exemple de réalisation d'un dispositif de qualification de jauges de déformation selon l'invention.

Le dispositif de qualification de jauges de déformation 100 est formé par un support 10, avantageusement en forme circulaire tel qu'un de disque, destiné à recevoir des jauges de déformation 12 à qualifier. Les jauges de déformation 12 sont positionnées sur les surfaces latérales du disque. Le support 10 est solidaire de part et d'autre d'un arbre de transmission 20. Les arbres de transmission 20 sont classiquement positionnés axialement et radialement par un ou plusieurs roulements à billes 22 fixés dans un carter 15, le carter 15 étant relié au bâti du dispositif 100. L'ensemble ainsi constitué formant des moyens de mise en rotation 120 du disque support 10.

Pour entraîner en rotation le disque support 10 à un régime de rotation souhaité, un des deux arbres de transmission 20 est couplé à un moteur, tel que par exemple un moteur électrique (non représenté). Afin de représenter les conditions des turbomachines, le moteur doit pouvoir entraîner le disque à une vitesse de rotation de l'ordre de 20000 tours/minute.

Le disque support 10 est réalisé dans un matériau résistant à la contrainte centrifuge (rotation de l'ordre de 20000 tour/minute) et à la contrainte de température (de l'ordre de 700-800°C). A cet effet, le disque 10 est réalisé par exemple-en Inconel.

Le dispositif de qualification 100 comporte des moyens de mise en température des jauges de déformation 12. Ces moyens sont formés par un four 11, chauffant par rayonnement, englobant le disque support 10. Le four permet ainsi d'adapter la température de chauffe à la température à laquelle on souhaite tester les jauges, par exemple de l'ordre de 1100°C pour représenter les conditions d'essai d'une turbomachine.

Selon le mode de réalisation illustré à la figure unique, le four 11 est constitué en deux parties venant s'assembler autour du disque support 10 tout en permettant une libre rotation du disque support 10.

Afin d'éviter une propagation de la chaleur en provenance du four vers les autres pièces du dispositif 100 et notamment vers les roulements 22, par conduction thermique, le dispositif 100 comporte des moyens de refroidissement 13 disposés de part et d'autre du disque support 10. Les moyens de refroidissement 13 sont solidarisés au disque support 10 par vissage.

Les moyens de refroidissement 13 sont agencés de sorte qu'ils entourent les parois latérales du four de manière à éviter les fuites d'air chaud qui pourraient échauffer les autres pièces du dispositif 100 par convection ou par conduction.

Les moyens de refroidissement 13 sont formés par une succession d'ailettes radiales 21 permettant d'avoir une importante surface d'échange de chaleur avec l'air environnant.

De façon avantageuse, et pour améliorer le refroidissement du dispositif 100, il est envisagé de positionner des générateurs de froid tels que par exemple des canons 14 ou des buses soufflant de l'air froid en direction des ailettes radiales 21. Selon un mode de réalisation particulier de l'invention, les canons à air 14 sont des tubes vortex, également connus sous le nom de tube de Ranque-Hilsch.

Ainsi, les moyens de refroidissements 13 combinés aux tubes vortex 14 permettent de maintenir une température convenable au niveau des roulements, c'est-à-dire à une température inférieure à la température limite d'utilisation de l'huile servant à lubrifier les roulements, qui est de l'ordre de 100°C, et avantageusement de l'ordre de 50°C.

Le dispositif de qualification 100 comporte également deux flasques de liaison 16 et 17 permettant de solidariser les moyens de refroidissement et le support disque 10 aux arbres de transmission 20.

Selon le mode de réalisation avantageux illustré, le premier flasque de liaison 16 est solidarisé aux moyens de refroidissement et à un arbre de transmission 20 par vissage. Le second flasque de liaison 17 comporte une liaison par cannelures entre le second flasque de liaison et l'arbre de transmission 20 et est solidarisé plus classiquement par vissage aux moyens de refroidissement.

La liaison par cannelures permet ainsi d'autoriser d'éventuelles dilations des pièces sur l'alignement des arbres de transmission sans la mise sous contraintes mécaniques des pièces, ce qui serait préjudiciable pour leur durée de vie.

Le choix du rayon de fixation des jauges sur les parois latérales du disque 10 s'effectue par l'opérateur en tenant compte de leur masse spécifique, des vitesses de rotation et des températures souhaitées lors de la réalisation de l'essai.

Ainsi, le dispositif selon l'invention a pour avantage de minimiser les risques d'endommagement d'un moteur d'essai par la qualification préalable des jauges mais également des matériaux utilisés pour leur collage.

Le dispositif a également pour avantage de permettre une comparaison facile, rapide et et dans les mêmes conditions d'essai de différentes technologie de jauges et de moyens de fixation.

## Revendications

1. Dispositif de qualification de jauges à déformation (100) comportant :
- un support (10) apte à recevoir des jauges de déformation (12) ; **caracterisé par**
- des moyens de mise en rotation (120) pour entraîner en rotation ledit support (10), ledit support (10) étant relié aux moyens de mise en rotation (120) via des moyens de liaison (13, 17) ;
- des moyens de mise en température (11) aptes à chauffer ledit support (10) et agencés autour dudit support (10) ;
lesdits moyens de liaison (13, 17) comportant des moyens de refroidissement (13) aptes à limiter l'échauffement desdits moyens de mise en rotation (120).

2. Dispositif de qualification de jauges à déformation (100) selon la revendication précédente **caractérisé en ce que** lesdits moyens de liaison (13, 17) comportent des moyens (17) aptes à autoriser la dilatation desdits moyens de liaisons sous l'effet de l'augmentation de la température desdits moyens de liaisons (13, 117) sans mise sous contrainte desdits moyens de mise en rotation (120).

3. Dispositif de qualification de jauges à déformation (100) selon la revendication précédente **caractérisé en ce que** ledit support est entraîné en rotation par deux arbres de transmission (20) agencés de part et d'autre dudit support (10).

4. Dispositif de qualification de jauges à déformation (100) selon l'une des revendications précédentes **caractérisé en ce que** lesdits moyens de mise en température (11) sont formés par un four chauffant par rayonnement.

5. Dispositif de qualification de jauges à déformation (100) selon l'une des revendications précédentes **caractérisé en ce que** lesdits moyens de refroidissement (13) sont agencés de part et d'autre desdits moyens de mise en température (11) de manière à limiter la propagation de la chaleur par conduction vers lesdits moyens de mise en rotation (120).

6. Dispositif de qualification de jauges à déformation (100) selon l'une des revendications précédentes **caractérisé en ce que** les moyens de refroidissement (13) desdits moyens de liaisons sont formés par une pluralité d'ailettes de refroidissement (21),

7. Dispositif de qualification de jauges à déformation (100) selon la revendication précédente **caractérisé en ce que** ledit dispositif comporte des moyens de refroidissement secondaires (14) aptes à améliorer le refroidissement desdits ailettes de refroidissement (21).

8. Dispositif de qualification de jauges à déformation (100) selon la revendication précédente **caractérisé en ce que** lesdits moyens de refroidissement secondaires (14) sont formés par des générateurs soufflant de l'air sur lesdites ailettes de refroidissement (21).

9. Dispositif de qualification de jauges à déformation (100) selon l'une des revendications précédentes **caractérisé en ce que** ledit support est un disque.

## Patentansprüche

1. Qualifizierungsvorrichtung für Verformungsmessinstrumente (100), umfassend:
- einen Träger (10), der geeignet ist, Verformungsmessinstrumente (12) aufzunehmen; **gekennzeichnet durch**
- Mittel zur Einleitung von Rotationen (120) zum Antreiben des genannten Trägers (10), wobei der genannte Träger (10) mit den Mitteln zur Einleitung von Rotationen (120) über Verbindungsmittel (13, 17) verbunden ist;
- Mittel zur Temperaturmessung (11), die geeignet sind, den genannten Träger (10) zu erhitzen und um den genannten Träger (10) angeordnet sind;
wobei die genannten Verbindungsmittel (13, 17) Abkühlmittel (13) umfassen, die geeignet sind, die Erhitzung der genannten Mittel zur Einleitung von Rotationen (120) zu begrenzen.

2. Qualifizierungsvorrichtung für Verformungsmessinstrumente (100) gemäß dem voranstehenden Anspruch, **dadurch gekennzeichnet, dass** die genannten Verbindungsmittel (13, 17) Mittel (17) umfassen, die geeignet sind, die Ausdehnung der genannten Verbindungsmittel unter der Wirkung der Erhöhung der Temperatur der genannten Verbindungsmittel (13, 17) ohne Unter-Spannung-Setzen der genannten Mittel zur Einleitung von Rotationen (120) zu erlauben.

3. Qualifizierungsvorrichtung für Verformungsmessinstrumente (100) gemäß dem voranstehenden Anspruch, **dadurch gekennzeichnet, dass** der genannte Träger in Rotation durch zwei Übertragungswellen (20) angetrieben wird, die auf jeder Seite des Trägers (10) angeordnet sind.

4. Qualifizierungsvorrichtung für Verformungsmessinstrumente (100) gemäß einem der voranstehenden Ansprüche, **dadurch gekennzeichnet, dass** die genannten Mittel zur Temperaturanpassung (11) durch einen Ofen gebildet sind, der per Strahlung heizt.

5. Qualifizierungsvorrichtung für Verformungsmessinstrumente (100) gemäß einem der voranstehenden Ansprüche, **dadurch gekennzeichnet, dass** die genannten Abkühlmittel (13) auf jeder Seite der genannten Mittel zur Temperaturanpassung (11) derart angeordnet sind, dass die Verbreitung der Wärme per Leitung der zu den genannten Mitteln zur Einleitung von Rotationen (120) begrenzt wird.

6. Qualifizierungsvorrichtung für Verformungsmessinstrumente (100) gemäß einem der voranstehenden Ansprüche, **dadurch gekennzeichnet, dass** die Abkühlmittel (13) der genannten Verbindungsmittel durch eine Vielzahl von Abkühlflügeln (21) gebildet sind.

7. Qualifizierungsvorrichtung für Verformungsmessinstrumente (100) gemäß dem voranstehenden Anspruch, **dadurch gekennzeichnet, dass** die genannte Vorrichtung sekundäre Abkühlmittel (14) umfasst, die geeignet sind, das Abkühlen der genannten Abkühlflügel (21) zu verbessern.

8. Qualifizierungsvorrichtung für Verformungsmessinstrumente (100) gemäß dem voranstehenden Anspruch, **dadurch gekennzeichnet, dass** die genannten sekundären Abkühlmittel (14) durch Generatoren gebildet sind, die Luft auf die genannten Abkühlflügel (21) blasen.

9. Qualifizierungsvorrichtung für Verformungsmessinstrumente (100) gemäß einem der voranstehenden Ansprüche, **dadurch gekennzeichnet, dass** der genannte Träger eine Scheibe ist.

## Claims

1. Device for classifying strain gauges (100), comprising:
- a holder (10) capable of receiving strain gauges (12); **characterised by**
- a rotating means (120) for rotating said holder (10), said holder (10) being connected to the rotating means (120) by a linking means (13, 17);
- a temperature-setting means (11) capable of heating said holder (10) and arranged about said mounting (10);
said linking means (13, 17) comprising a cooling means (13) capable of limiting the heating of said rotating means (120).

2. Device for classifying strain gauges (100) according to the preceding claim **characterised in that** said linking means (13, 17) comprise means (17) capable of authorising the expansion of said linking means under the effect of the increase in the temperature of said linking means (13, 17) without stressing said rotating means (120).

3. Device for classifying strain gauges (100) according to the preceding claim **characterised in that** said holder is driven in rotation by two transmission shafts (20) arranged on either side of said holder (10).

4. Device for classifying strain gauges (100) according to the preceding claim **characterised in that** said means for warming (11) are formed by a radiation oven.

5. Device for classifying strain gauges (100) according to one of the preceding claim **characterised in that** said means for cooling (13) are arranged on either side of said means for warming (11) in such a way as to limit the propagation of the heat by conduction to said rotating means (120).

6. Device for classifying strain gauges (100) according to one of the preceding claim **characterised in that** said means for cooling (13) of said linking means are formed by a plurality of cooling vanes (21).

7. Device for classifying strain gauges (100) according to the preceding claim **characterised in that** said device comprises secondary means for cooling (14) capable of improving the cooling of said cooing vanes (21).

8. Device for classifying strain gauges (100) according to the preceding claim **characterised in that** said secondary means for cooling (14) are formed by generators blowing air on said cooling vanes (21).

9. Device for classifying strain gauges (100) according to one of the preceding claims **characterised in that** said holder is a disc.
